# EUROPÄISCHE PATENTSCHRIFT

(11) **EP 0 715 545 B1**
(45) Veröffentlichungstag und Bekanntmachung des Hinweises auf die Patenterteilung: **06.05.1999**
(21) Anmeldenummer: 94925452.8
(22) Anmeldetag: 11.08.1994
(51) Int. Cl.: B01J 20/26, B01D 53/34

(54) **FILTERMATERIAL UND VERFAHREN ZUR ENTFERNUNG VON STICKOXIDEN AUS GASEN UND FLÜSSIGKEITEN**
FILTER MATERIAL AND A METHOD OF REMOVING NITROGEN OXIDES FROM GASES AND LIQUIDS
MATERIAU FILTRANT ET PROCEDE PERMETTANT D'ELIMINER LES OXYDES NITRIQUES CONTENUS DANS DES GAZ ET DES LIQUIDES

(30) Priorität: 24.08.1993 DE 4328450
(43) Veröffentlichungstag der Anmeldung: 12.06.1996
(73) Patentinhaber: Ticona GmbH, 65451 Kelsterbach (DE)
(72) Erfinder: SCHLEICHER, Andreas, D-64683 Einhausen (DE); FLEISCHER, Dietrich, D-64287 Darmstadt (DE); KULPE, Jürgen, D-65929 Frankfurt am Main (DE); FRANK, Georg, D-72074 Tubingen (DE)
(86) Internationale Anmeldenummer: EP9402688
(87) Internationale Veröffentlichungsnummer: WO9505894

(56) Entgegenhaltungen:
- EP-A- 0 098 823
- EP-A- 0 297 744
- WO-A-91/18041
- DE-A- 3 921 500
- US-A- 3 948 865
- US-A- 4 059 719

## Beschreibung

Die Erfindung betrifft ein Filtermaterial sowie ein Verfahren zur Entfernung von Stickoxiden aus Gasen und Flüssigkeiten, indem der Gasstrom oder eine Flüssigkeit mit einem Filtermaterial aus Polyarylenthioether oder einer Mischung aus Polyarylenthioether und oxidativ wirkenden Verbindungen in Kontakt gebracht wird.

Es ist bekannt, daß bei praktisch allen Verbrennungsvorgängen, z. B. in mit fossilen Brennstoffen betriebenen Kraftwerken und in Kraftfahrzeugmotoren, sogenannte "Stickoxide", (NOₓ) gebildet werden, die in die Umwelt gelangen. Dabei handelt es sich im wesentlichen um Stickstoffmonoxid (NO) und Stickstoffdioxid (NO₂) bzw. Addukte aus beiden. Aufgrund der leichten Oxidierbarkeit von Stickstoffmonoxid mit Sauerstoff liegt in der Atmosphäre hauptsächlich Stickstoffdioxid vor. Im Hinblick auf umweltrelevante Fragestellungen weisen die Stickoxide im wesentlichen zwei Probleme auf. Zum einen werden sie als Precursor für die Ozonbildung angesehen und zum andern geht von ihnen auch in geringen Konzentrationen ein beträchtliches gesundheitliches Risiko aus (Römpp Chemie Lexikon, 9. Aufl., Bd. 5, 4314-6).

Um hier Abhilfe zu schaffen, sind eine Vielzahl von Verfahren entwickelt worden, die die Entfernung der Stickoxide aus dem von derartigen Vorrichtungen, wie Verbrennungsmotoren, freigesetzten Luftstrom beschreiben. Dabei werden die Stickoxide entweder zerstört, bzw. chemisch oder physikalisch gebunden.

Es ist bekannt, den Gasstrom durch ein Filter zu leiten, in dem die Stickoxide bei erhöhten Temperaturen durch Zusatz radikalbildender Verbindungen katalytisch zersetzt bzw. reduziert werden (WO 92/04962). Das Basismaterial des Filters ist mit einer oder mehreren Metallverbindungen, Metallen oder Legierungen, z.B. Eisen-, Chrom- oder Nickelverbindungen, imprägniert, denen weiterhin eine Verbindung oder ein Metall aus der Gruppe der sogenannten Edelmetalle, z. B. Palladium oder Platin, zugegeben wird. Diese Katalysatoren sind sehr teuer und haben meist nur eine begrenzte Lebensdauer, da solche heterogenen Katalysatoren durch verschiedene Katalysatorgifte schnell desaktiviert werden. Zudem ist der notwendige Energiebedarf sehr ungünstig.

Auch Aktivkohle kann als Adsorbens zur Entfernung von Stickoxiden verwendet werden (Römpp Chemie Lexikon, 9. Aufl., Bd. 2, 1181, Tabelle; Ullmann's Encycl. Ind. Chem., 5. Ed., Vol. A17, 328). Aktivkohlefilter altern jedoch, weil durch Adsorption von Dämpfen oder Feuchtigkeit ihre aktive Oberfläche verringert wird, siehe auch Kirk-Othmer, 3. Ed., 4, 565 ("storage"). Insbesondere werden Aktivkohlefilter zur Entfernung von Benzindämpfert z.B. bei PKW oder von anderen Kohlenwasserstoffverbindungen eingesetzt, die sie sehr gut aus der Luft adsorbieren, wodurch ihre weitere Adsorptionsmöglichkeit für NOₓ-Gase verringert wird. Ferner steht nur ein geringer Anteil des Filtergewichts als aktiver Anteil zur Verfügung.

In der EP-A-0 405 265 ist ferner die Permeationswirkung von speziell hergestellten Polyphenylensulfid-(PPS)-Folien gegenüber schwefeloxid- oder stickoxidhaltigen Gasen beschrieben. Dabei handelt es sich mehr oder weniger um eine rein physikalische Trennung. Es wird erwähnt, daß die zur Trennung der Abgase verwendeten Medien gegen die zu trennenden Gase inert sein sollen und daß sie eine gute Durchlässigkeit für diese Phase haben müssen. Eine vollständige Filterwirkung gegenüber Schwefeloxiden oder Stickoxiden bzw. Adsorption von Schwefeloxiden oder Stickoxiden wurde dabei nicht beobachtet.

Aufgabe der Erfindung war es daher, ein Filter und ein Verfahren zur Entfernung von Stickoxiden zur Verfügung zu stellen, bei denen die genannten Nachteile nicht auftreten.

Die Erfindung betrifft ein Filter auf Polymerbasis zur Entfernung von Stickoxiden, insbesondere von Stickstoffdioxid, aus Gasen und Flüssigkeiten durch chemische Reaktion zwischen dem Filtermaterial und Stickoxiden, das auch bei Umgebungstemperaturen wirksam ist und das einen Polyarylenthioether der Formel

-[(Ar¹)ₙ-X)]ₘ-[(Ar²)ᵢ-Y)]ⱼ-[(Ar³)ₖ-Z)]ₗ-[(Ar⁴)ₒ-W)]ₚ- (I)

enthält, wobei Ar¹, Ar², Ar³, Ar⁴, W, X, Y und Z unabhängig voneinander gleich oder verschieden sind. Die Indizes n, m, i, j, k, l, o und p sind unabhängig voneinander Null oder ganze Zahlen 1,2,3 oder 4, wobei ihre Summe mindestens 2 ergeben muß, Ar¹, Ar², Ar³ und Ar⁴ stehen in der Formel (I) für Arylensysteme mit 6 bis 18 C-Atomen, W, X, Y und Z stellen zweiwertige Verknüpfungsgruppen dar, ausgewählt aus -SO₂-, -S-, -SO-, -CO-, -O-, -CO₂-, Alkylen- oder Alkylidengruppen mit 1 bis 6, vorzugsweise 1 bis 4 C-Atomen. Mindestens eine der Verknüpfungsgruppen W, X, Y, Z in Formel (I) besteht aus -S-.

Bevorzugte Arylensysteme sind Phenylen, Biphenylen oder Naphtalen. W, X, Y und Z sind bevorzugt -SO₂-, -S- oder -SO-.

Da die Reaktionsgeschwindigkeit von Stickstoffmonoxid mit dem Polyarylenthioether gering ist, enthält das Filtermaterial zusätzlich mindestens ein Oxidationsmittel, d.h. mindestens eine oxidativ wirkende anorganische oder organische Verbindung, die ein Elektronenpotential von größer gleich 0,96 V aufweist, z.B. Chlorkalk, Natriumhypochlorit, Vanadinpentoxid, Dichlordicyanochinon. Diese überführen das NO in NO₂, welches dann durch das Polymer schneller entfernt wird.

Die Erfindung bezieht sich außerdem auf ein Verfahren zur Entfernung von Stickoxiden aus Gasen und Flüssigkeiten, bei dem ein Filter eingesetzt wird, enthaltend einen Polyarylenthioether mit wiederkehrenden Einheiten der Formel (I) als zersetzende Verbindung für Stickoxide, wobei das Gas oder die Flüssigkeit mit dem Filtermaterial in Kontakt gebracht und dabei die Stickoxide durch eine chemische Reaktion mit dem Filtermaterial entfernt werden. Das in dem erfindungsgemäßen Verfahren eingesetzte Filtermaterial enthält zur besseren Entfernung von Stickstoffmonoxid die vorstehend genannten oxidativ wirkenden anorganischen bzw. organischen Verbindungen .

Bevorzugt als Polyarylenthioether ist Polyphenylensulfid (PPS) mit der wiederkehrenden Einheit der Formel (II), dessen Herstellungsprozeß z. B. in den US-Patentschriften 3,354,129; 3,919,177; 4,038,262 und 4,282,347 beschrieben ist.

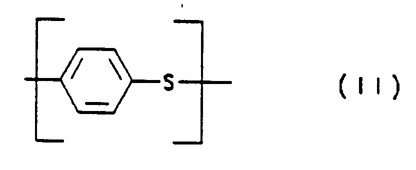

Das PPS der Formel (II) kann auch bis zu einem Anteil von 50 Mol-% eine 1,4- und/oder 1,3-Verknüpfung am aromatischen Kern aufweisen. Unter "PPS" ist sowohl das lineare als auch das vernetzte Material zu verstehen.

Darüberhinaus verwendbare Ausgangspolymere sind beispielsweise Polyarylenthioether mit wiederkehrenden Einheiten der Formeln (III) - (VII), deren Synthesen z. B. in Chimia 28(9), 567 beschrieben sind: 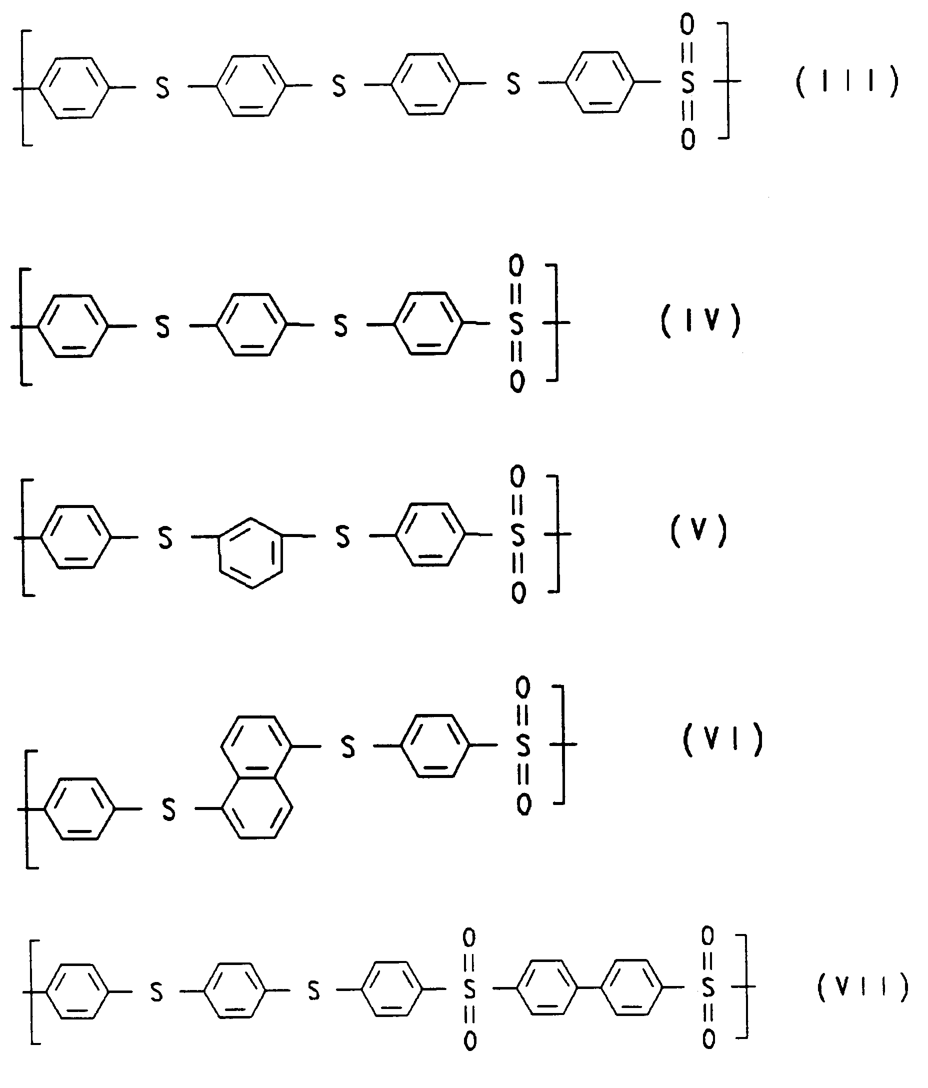 sowie Polyarylenthioether mit wiederkehrenden Einheiten der Formel (VIII), die z.B. in US-A-4,016,145 beschrieben sind.

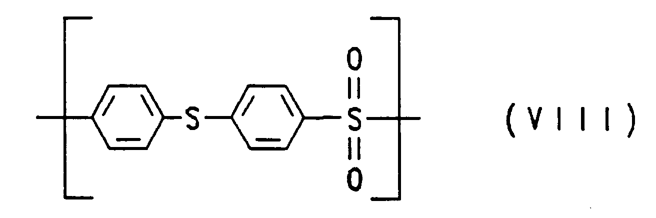

Für die Erfindung sind im allgemeinen Polyarylenthioether geeignet, die ein mittleres Molekulargewicht Mw von 4 000 bis 200 000, vorzugsweise von 10 000 bis 150 000, insbesondere 25 000 bis 100 000 g/mol.

Die Polymere können als Pulver, Fasern oder Formkörper zur Herstellung eines Filters eingesetzt werden. Durch geeignete Verfahren lassen sich letztere auch mit besonders großer Oberfläche herstellen, beispielsweise mit Gitter- oder Wabenstruktur. Die Pulver besitzen handelsübliche Teilchengrößen, wobei auch Granulate verwendbar sind. Wichtig hierbei ist es, daß das zu behandelnde Gas oder die Flüssigkeit durch das Polymermaterial, beispielsweise in Form eines Pulver-Festbettes, ohne Störung durchgeleitet werden kann. Werden die Polymere als Fasern verwendet, werden diese als Stapelfasern, Nadelfilz, "non woven" Material, Kardenband oder Gewebe eingesetzt. Auch Folien oder Folienschnipsel können in geeigneter Form Verwendung finden.

Der stickoxidhaltige Gasstrom oder die Flüssigkeit kann bei jeder Temperatur, die unterhalb des Erweichungspunktes der Polymeren liegt, mit dem Filtermaterial gemäß der Erfindung behandelt werden. Im allgemeinen liegen die Anwendungstemperaturen im Bereich von -10 bis +240°C, vorzugsweise 0 bis 220°C.

Die Entfernung von Stickstoffdioxid erfolgt im allgemeinen quantitativ, wobei die Reaktionszeiten von den Strömungsgeschwindigkeiten und der Oberfläche des Filterguts beziehungsweise der Schütthöhe bei Pulvern abhängig ist. Im allgemeinen beträgt die Verweilzeit im Filter 0,1 Sekunden bis 20 Minuten, vorzugsweise 0,5 Sekunden bis 1 Minute. Die Grenzwerte können aber auch überschritten werden.

Gegenüber Stickstoffdioxid wird das Stickstoffmonoxid durch Polyarylenthioether nur in geringem Umfang entfernt. Durch die Zugabe von oxidativ wirkenden Verbindungen, wie vorstehend beschrieben, erfolgt aber die Abtrennung nahezu quantitativ, wobei auch hier die Reaktionszeiten von den Strömungsgeschwindigkeiten und der Oberfläche des Filterguts bzw. bei Pulvern von der Schütthöhe abhängig sind.

Bei der Behandlung der eingesetzten Polyarylenthioether mit dem stickoxidhaltigen Medium wird das Stickstoffdioxid reduziert und die Thioethergruppen der Polymere oxidiert. Die Aufnahmekapazität der Filter gemäß der Erfindung reicht bis zur völligen Umsetzung der Sulfid-Brücken. Das erschöpfte Filtermaterial, z. B. das oxidierte Polyarylensulfid, stellt ein neu gebildetes Polymer mit anderen Eigenschaften als das Ausgangspolymer dar. Dieses kann nun erneut für andere Zwecke, beispielsweise zur Herstellung von Formkörpern, verwendet werden. Die erschöpften Filtermaterialien sind somit voll recyklisierbar und stellen keine Belastung für die Umwelt dar.

Bei der Entfernung der Stickstoffoxide aus dem Gas- oder Flüssigkeitsstrom werden aus dem Polymer keine flüchtigen Produkte gebildet.

Das Filtermaterial auf Basis von Polyarylenthioether kann im allgemeinen als unverschnittenes Material eingesetzt werden. Möglich ist aber auch der Zusatz von üblichen Füllstoffen, wie Kreide, Talk, Ton, Glimmer, und/oder faserförmige Verstärkungsmittel, wie Glas- und Kohlenstoffasern, Whiskers, sowie weitere übliche Zusatzstoffe und Verarbeitungshilfsmittel, z.B. Gleitmittel, Trennmittel, Antioxidantien, UV-Stabilisatoren, enthalten.

Das Filter gemäß der Erfindung kann bei allen NOₓ-haltigen Gasströmen und Flüssigkeiten verwendet werden. So kann es beispielsweise Anwendung finden in Filtermasken, in Klimaanlagen, in Automobilen (z. B. Luftfilter, Abgasfilter), zur Entfernung der bei der Verbrennung entstandenen Stickoxide (z. B. Rauchgasreinigung), ferner zur Entfernung und Unschädlichmachung von Stickoxiden in Flüssigkeiten.

Ein großes Einsatzgebiet ist die Verwendung der Filtermaterialien in Kraftwerken, die mit fossilen Brennstoffen betrieben werden. Die hierbei entstehenden Rauchgase enthalten einen erheblichen Anteil an NO_{X}, der bisher in aufwendiger Weise reduziert werden mußte, um die in der geltenden Großfeuerungsanlagenverordnung vorgeschriebene NO_{X}-Konzentration von höchstens 200 mg/m³ zu erreichen. Die bisher angewandten Maßnahmen in Gegenwart von Katalysatoren erfordern Temperaturen von über 350°C oder höher, je nach angewandtem Verfahren. Durch Einsatz des Filtermaterials gemäß der Erfindung kann die Entfernung von NO_{X} bei erheblich tieferen Temperaturen erfolgen, d.h. dem Prozeß kann die im allgemeinen erforderliche Entstaubung vorgeschaltet werden, worauf das abgekühlte Rauchgas von NO_{X} befreit wird. Es entfällt somit die bisher erforderliche Wiederaufheizung der Rauchgase. Außerdem ist - da katalysatorfrei - keine Inaktivierung des Katalysators gegeben.

### Beispiel 1

In einem Gasmischsystem mit Ozon-Generator, Gerätetyp MCZ 3010 der Firma MCZ, (Roßbach, Bundesrepublik Deutschland), wurde trockene und über Aktivkohle gereinigte sogenannte "Nulluft" oder Normalluft zusammen mit einem NO-Vorgemisch in Stickstoff gemischt, so daß im Gasausgang eine NO₂-Konzentration von 0,8 ppm vorhanden war.

Das Gasgemisch wurde durch eine Filterpatrone geleitet, die mit Polyphenylensulfid (Mw = 30 000, Tₘ = 288°C), in Pulverform gefüllt war. Innendurchmesser: 20 mm, Füll-Länge: 50 mm, Inhalt: 15,7 cm³, Strömungsgeschwindigkeit: 0,5 l/min = 2,65 cm³/sec

### Beispiel 2

In einem Gasmischsystem bestehend aus Flow-Controllern (Firma MKS Instruments Typ 1259 C und einem zugehörigen Kontrollgerät MKS Instruments 247 C, MKS Instruments GmbH, 81829 München, Schatzbogen 43 Bundesrepublik Deutschland) wurde eine Gasmischung bestehend aus 25 ppm NO₂ und 50 ppm NO in Stickstoff hergestellt. Die Ausgangsgase waren Prüfgasgemische bestehend aus 500 ppm NO₂ in Stickstoff und 500 ppm NO in Stickstoff, beide Gase wurden von Messer Griesheim GmbH Wörthstr. 170,47053 Duisburg bezogen. Die Verdünnung erfolgte mit Stickstoff, ebenfalls von Messer-Griesheim. Die Strömungsgeschwindigkeit der Gasmischung betrug 95 l/1h.

Das Gasgemisch wurde durch ein Glasfilterrohr geleitet, das mit einer Mischung aus Polyphenylensulfid (Mw 30 000, Tₘ = 288°C) in Pulverform der Fraktion 0.5 < x < 1 mm und Ca(OCl)₂ in Pulverform gefüllt war. Die beiden Pulver wurden vor dem Einfüllen in die Patrone homogen gemischt. Der Innendurchmesser des Glasrohres betrug 4 cm und die Gesamtfüllhöhe 15 cm. Der Inhalt betrug somit 188,4 cm³. Die Temperatur des Filters betrug 22°C.

Die Zusammensetzung des Gasgemisches vor und nach dem Filter wurde mit einem Ghemolumineszens-Analysator des Typs CLD 700 EL ht der Firma ECO Physics (ECO Physics AG, CH-8635 Dürnten, Schweiz) analysiert. Der Meßbereich des Gerätes während der Messung betrug 0 - 100 ppm für NO, NO₂ und NOₓ. Während des Meßzeitraumes von 5 Stunden betrug der NO Gehalt weniger als 2 ppm und der NO₂-Gehalt weniger als 5 ppm. Die Gesamtfilterleistung war somit größer als 90 %.

### Beispiel 3

In einem Gasmischsystem bestehend aus Flow-Controllern (Firma MKS Instruments Typ 1259 C und einem zugehörigen Kontrollgerät MKS Instruments 247 C, MKS Instruments GmbH, 81829 München, Schatzbogen 43 Bundesrepublik Deutschland) wurde eine Gasmischung hergestellt, die 25 ppm NO₂ in Stickstoff enthält. Das Ausgangsgas war ein Prüfgasgemisch bestehend aus 500 ppm NO₂ in Stickstoff wurde von Messer-Griesheim GmbH Wörthstr. 170, 47053 Duisburg bezogen. Die Verdünnung erfolgte mit Stickstoff, ebenfalls von Messer-Griesheim. Die Strömungsgeschwindigkeit der Gasmischung betrug 95 l/h.

Das Gasgemisch wurde durch ein Glasfilterrohr geleitet, das mit Polyphenylensulfid (Mw = 30000 Tₘ = 288 °C) in Pulverform der Fraktion 0.5 < x < 1 mm gefüllt war. Der Innendurchmesser des Glasrohres betrug 4 cm und die Gesamtfüllhöhe 10 cm. Der Inhalt betrug somit 125,6 cm³. Die Temperatur des Filters betrug 80°C.

Die Zusammensetzung des Gasgemisches vor und nach dem Filter wurde mit einem Chemolumineszens-Analysator des Typs CLD 700 EL ht der Firma ECO Physics (EGO Physics AG CH-8635 Dürnten, Schweiz) analysiert. Der Meßbereich des Gerätes während der Messung betrug 0 - 100 ppm für NO₂. Während des Meßzeitraumes von 50 Stunden betrug der NO₂-Gehalt weniger als 0,2 ppm. Die Meßgenauigkeit des Gerätes liegt bei 0,2 ppm.

### Beispiel 4

In einem Gasmischsystem bestehend aus Flow-Controllern (Firma MKS Instruments Typ 1259 C und einem zugehörigen Kontrollgerät MKS Instruments 247 C, MKS Instruments GmbH, 81829 München, Schatzbogen 43 Bundesrepublik Deutschland) wurde eine Gasmischung hergestellt, die 500 ppm NO₂ in Stickstoff enthält. Das Ausgangsgas war ein Prüfgasgemisch bestehend aus 500 ppm NO₂ in Stickstoff wurde von Messer-Griesheim GmbH Wörthstr. 170, 47053 Duisburg bezogen. Die Verdünnung erfolgte mit Stickstoff, ebenfalls von Messer-Griesheim. Die Strömungsgeschwindigkeit der Gasmischung betrug 95 l/h.
Das Gasgemisch wurde durch ein Glasfilterrohr geleitet, das mit Polyphenylensulfid (Mw = 30 000, Tₘ = 288 °C) in Pulverform der Fraktion 0.5 < x < 1 mm gefüllt war. Der Innendurchmesser des Glasrohres betrug 4 cm und die Gesamtfüllhöhe 10 cm. Der Inhalt betrug somit 125,6 cm³. Die Temperatur des Filters betrug 25°C.
Die Zusammensetzung des Gasgemisches vor und nach dem Filter wurde mit einem Chemolumineszens-Analysator des Typs CLD 700 EL ht der Firma ECO Physics (ECO Physics AG CH-8635 Dürnten, Schweiz) analysiert. Der Meßbereich des Gerätes während der Messung betrug 0 - 100 ppm für NO₂.
Während des Meßzeitraumes von 2 Stunden betrug der NO₂-Gehalt weniger als 0,2 ppm. Die Meßgenauigkeit des Gerätes liegt bei 0,2 ppm.

### Beispiel 5

In einem Gasmischsystem bestehend aus Flow-Controllern (Firma MKS Instruments Typ 1259 & und einem zugehörigen Kontrollgerät MKS Instruments 247 C, MKS Instruments GmbH, 81829 München, Schatzbogen 43 Bundesrepublik Deutschland) wurde eine Gasmischung hergestellt, die 10 ppm NO₂ in Stickstoff enthält. Das Ausgangsgas war ein Prüfgasgemisch bestehend aus 500 ppm NO₂ in Stickstoff wurde von Messer-Griesheim GmbH Wörthstr. 170, 47053 Duisburg bezogen. Die Verdünnung erfolgte mit Stickstoff, ebenfalls von Messer-Griesheim. Die Strömungsgeschwindigkeit der Gasmischung betrug 200 l/h.
Das Gasgemisch wurde durch ein Glasfilterrohr geleitet, das mit Polyphenylensulfid (Mw = 30 000, Tₘ = 288 °C) in Pulverform der Fraktion 0.5 < x < 1 mm gefüllt war. Der Innendurchmesser des Glasrohres betrug 4 cm und die Gesamtfüllhöhe 8 cm. Der Inhalt betrug somit 100,5 cm³. Die Temperatur des Filters betrug 22°C. Die Zusammensetzung des Gasgemisches vor und nach dem Filter wurde mit einem Chemolumineszens-Analysator des Typs CLD 700 EL ht der Firma ECO Physics (ECO Physics AG CH-8635 Dürnten, Schweiz) analysiert. Der Meßbereich des Gerätes während der Messung betrug 0 - 100 ppm für NO₂.
Während des Meßzeitraumes von 10 Stunden betrug der NO₂-Gehalt weniger als 0,2 ppm. Die Meßgenauigkeit des Gerätes liegt bei 0,2 ppm.

### Beispiel 6

In einem Gasmischsystem bestehend aus Flow-Controllern (Firma MKS Instruments Typ 1259 C und einem zugehörigen Kontrollgerät MKS Instruments 247 C, MKS Instruments GmbH, 81829 München, Schatzbogen 43 Bundesrepublik Deutschland) wurde eine Gasmischung hergestellt, die 100 ppm NO₂ in Stickstoff enthält. Das Ausgangsgas war ein Prüfgasgemisch bestehend aus 500 ppm NO₂ in Stickstoff wurde von Messer-Griesheim GmbH Wörthstr. 170, 47053 Duisburg bezogen. Die Verdünnung erfolgte mit Stickstoff, ebenfalls von Messer-Griesheim. Die Strömungsgeschwindigkeit der Gasmischung betrug 100 l/h.

Das Gasgemisch wurde durch ein Glasfilterrohr geleitet, das mit Polyphenylensulfid (Mw = 30 000, Tₘ = 288 °C) in Pulverform der Fraktion 0.5 < x < 1 mm gefüllt war. Der Innendurchmesser des Glasrohres betrug 4 cm und die Gesamtfüllhöhe 21 cm. Der Inhalt betrug somit 263,8 cm³. Die Temperatur des Filters betrug 25°C.

Die Zusammensetzung des Gasgemisches vor und nach dem Filter wurde mit einem Chemolumineszens-Analysator des Typs CLD 700 EL ht der Firma ECO Physics (ECO Physics AG CH-8635 Dürnten, Schweiz) analysiert. Der Meßbereich des Gerätes während der Messung betrug 0 - 100 ppm für NO₂. Während des Meßzeitraumes von 15 Stunden betrug der NO₂-Gehalt weniger als 0,2 ppm. Die Meßgenauigkeit des Gerätes liegt bei 0,2 ppm.

### Beispiel 7

In einem Gasmischsystem bestehend aus Flow-Controllern (Firma MKS Instruments Typ 1259 C und einem zugehörigen Kontrollgerät MKS Instruments 247 C, MKS Instruments GmbH, 81829 München, Schatzbogen 43 Bundesrepublik Deutschland) wurde eine Gasmischung hergestellt, die 100 ppm NO₂ in Stickstoff enthält. Das Ausgangsgas war ein Prüfgasgemisch bestehend aus 500 ppm NO₂ in Stickstoff wurde von Messer-Griesheim GmbH Wörthstr. 170, 47053 Duisburg bezogen. Die Verdünnung erfolgte mit Stickstoff, ebenfalls von Messer-Griesheim. Die Strömungsgeschwindigkeit der Gasmischung betrug 25 l/h.

Das Gasgemisch wurde durch ein Glasfilterrohr geleitet, das mit Polyphenylensulfid (Mw = 40 000, Tₘ = 288 °C) in Pulverform der Fraktion 0.02 mm gefüllt war. Der Innendurchmesser des Glasrohres betrug 2 cm und die Gesamtfüllhöhe 9 cm. Der Inhalt betrug somit 28,3 cm³. Die Temperatur des Filters betrug 25°C.

Die Zusammensetzung des Gasgemisches vor und nach dem Filter wurde mit einem Chemolumineszens-Analysator des Typs CLD 700 EL ht der Firma ECO Physics (ECO Physics AG CH-8635 Dürnten, Schweiz) analysiert. Der Meßbereich des Gerätes während der Messung betrug 0 - 100 ppm für NO₂. Während des Meßzeitraumes von 12 Stunden betrug der NO₂-Gehalt weniger als 0,2 ppm. Die Meßgenauigkeit des Gerätes liegt bei 0,2 ppm.

### Beispiel 8

In einem Gasmischsystem bestehend aus Flow-Controllern (Firma MKS Instruments Typ 1259 C und einem zugehörigen Kontrollgerät MKS Instruments 247 C, MKS Instruments GmbH, 81829 München, Schatzbogen 43 Bundesrepublik Deutschland) wurde eine Gasmischung hergestellt, die 100 ppm NO₂ in Stickstoff enthält. Das Ausgangsgas war ein Prüfgasgemisch bestehend aus 500 ppm NO₂ in Stickstoff wurde von Messer-Griesheim GmbH Wörthstr. 170, 47053 Duisburg bezogen. Die Verdünnung erfolgte mit Stickstoff, ebenfalls von Messer-Griesheim. Die Strömungsgeschwindigkeit der Gasmischung betrug 25 l/h.

Das Gasgemisch wurde durch ein Glasfilterrohr geleitet, das mit Polyphenylensulfid (Mw = 40 000, Tₘ = 288 °C) in Pulverform der Fraktion 0.5 < x < 0.8 mm gefüllt war. Der Innendurchmesser des Glasrohres betrug 2 cm und die Gesamtfüllhöhe 13 cm. Der Inhalt betrug somit 40,8 cm³. Die Temperatur des Filters betrug 25°C.

Die Zusammensetzung des Gasgemisches vor und nach dem Filter wurde mit einem Chemolumineszens-Analysator des Typs CLD 700 EL ht der Firma ECO Physics (ECO Physics AG CH-8635 Dürnten, Schweiz), analysiert. Der Meßbereich des Gerätes während der Messung betrug 0 - 100 ppm für NO₂. Während des Meßzeitraumes von 12 Stunden betrug der NO₂-Gehalt weniger als 0,2 ppm. Die Meßgenauigkeit des Gerätes liegt bei 0,2 ppm.

### Beispiel 9

In einem Gasmischsystem bestehend aus Flow-Controllern (Firma MKS Instruments Typ 1259 C und einem zugehörigen Kontrollgerät MKS Instruments 247 C, MKS Instruments GmbH, 81829 München, Schatzbogen 43 Bundesrepublik Deutschland) wurde eine Gasmischung hergestellt, die 50 ppm NO₂ in Stickstoff enthält. Das Ausgangsgas war ein Prüfgasgemisch bestehend aus 500 ppm NO₂ in Stickstoff wurde von Messer-Griesheim GmbH Wörthstr. 170, 47053 Duisburg bezogen. Die Verdünnung erfolgte mit Stickstoff, ebenfalls von Messer-Griesheim. Die Strömungsgeschwindigkeit der Gasmischung betrug 12 l/h.

Das Gasgemisch wurde durch ein Reaktionsgefäß mit Scheibenrührer geleitet, in dem 20 g eines Polyphenylensulfidpulvers (Mw = 30 000, Tₘ = 288 °C) mit einem mittleren Teilchendurchmesser von 200 * 10⁻⁶ m in 75 ml Dichlormethan suspendiert waren. Das Gasgemisch wurde durch die Suspension geleitet. Die Reaktionstemperatur betrug 25°C.

Die Zusammensetzung des Gasgemisches vor und nach der Einleitung in die Suspension mit einem Chemolumineszens-Analysator des Typs CLD 700 EL ht der Firma ECO Physics (ECO Physics AG CH-8635 Dürnten, Schweiz) analysiert. Der Meßbereich des Gerätes während der Messung betrug 0 - 100 ppm für NO₂. Während des Meßzeitraumes von 30 Minuten betrug der NO₂-Gehalt weniger als 4 ppm. Die Meßgenauigkeit des Gerätes liegt bei 0,2 ppm.

### Beispiel 10

In einem Gasmischsystem bestehend aus Flow-Controllern (Firma MKS Instruments Typ 1259 C und einem zugehörigen Kontrollgerät MKS Instruments 247 C, MKS Instruments GmbH, 81829 München, Schatzbogen 43 Bundesrepublik Deutschland) wurde eine Gasmischung hergestellt, die 10 ppm NO₂ in Stickstoff enthält. Das Ausgangsgas war ein Prüfgasgemisch bestehend aus 500 ppm NO₂ in Stickstoff wurde von Messer-Griesheim GmbH Wörthstr. 170, 47053 Duisburg bezogen. Die Verdünnung erfolgte mit Stickstoff, ebenfalls von Messer-Griesheim. Die Strömungsgeschwindigket der Gasmischung betrug 12 l/h.

Das Gasgemisch wurde durch ein Reaktionsgefäß mit Scheibenrührer geleitet, in dem 20 g eines Polyphenylensulfidpulvers (Mw = 30000, Tₘ = 288 °C) mit einem mittleren Teilchendurchmesser von 200 * 10⁻⁶ m in 75 ml Dichlormethan suspendiert waren. Das Gasgemisch wurde durch die Suspension geleitet. Die Reaktionstemperatur betrug 25°C.

Die Zusammensetzung des Gasgemisches vor und nach der Einleitung in die Suspension mit einem Chemolumineszens-Analysator des Typs CLD 700 EL ht der Firma ECO Physics (EGO Physics AG CH-8635 Dürnten, Schweiz) analysiert. Der Meßbereich des Gerätes während der Messung betrug 0 - 100 ppm für NO₂. Während des Meßzeitraumes von 30 Minuten betrug der NO₂-Gehalt weniger als 1 ppm. Die Meßgenauigkeit des Gerätes liegt bei 0,2 ppm.

Der Gasfluß wurde in einen NO/NO₂-Analysator, Typ Tecan Modell CLD700 der Firma Zellweger Tecan Systeme (München, Bundesrepublik Deutschland), Meßbereich 0-10 ppm, geleitet und das durch die Filterpatrone geleitete Gasgemisch während eines Zeitraums über 48 Stunden analysiert. Der NO_{X}-Anteil des Gasgemisches wurde dabei vollständig absorbiert; die Meßwerte des Analysators liegen im Bereich der Nachweisgrenze.

## Patentansprüche

1. Filtermaterial auf Polymerbasis zur Entfernung von Stickoxiden aus Gasen und Flüssigkeiten durch chemische Reaktion zwischen dem Material und Stickoxiden, dadurch gekennzeichnet, daß es einen Polyarylenthioether mit wiederkehrenden Einheiten der Formel
-[(Ar¹)ₙ-X]ₘ-[(Ar²)ᵢ⁻Y]ⱼ-[(Ar³)ₖ-Z]ₗ-[(Ar⁴)ₒ-W]ₚ- (I)
worin Ar¹, Ar², Ar³, Ar^{4,} W, X, Y und Z unabhängig voneinander gleich oder verschieden sind, die Indizes n, m, i, j, k, l, o und p unabhängig voneinander Null oder ganze Zahlen 1, 2, 3 oder 4 sind, wobei ihre Summe mindestens 2 ist, Ar¹, Ar², Ar³ und Ar⁴ Arylensysteme mit 6 bis 18 C-Atomen sind und W, X, Y und Z zweiwertige Verknüpfungsgruppen darstellen, ausgewählt aus -SO₂-, -S-, -SO-, -CO-, -O, -CO₂- oder Alkylen- oder Alkylidengruppen mit 1 bis 6 C-Atomen, und mindestens eine der Verknüpfungsgruppen W, X, Y oder Z aus -S-besteht, enthält sowie mindestens ein Oxidationsmittel mit einem Elektronenpotential von größer gleich 0,96 V.

2. Filtermaterial nach Anspruch 1, dadurch gekennzeichnet, daß als Polyarylenthioether Polyphenylensulfid mit wiederkehrenden Einheiten der Formel 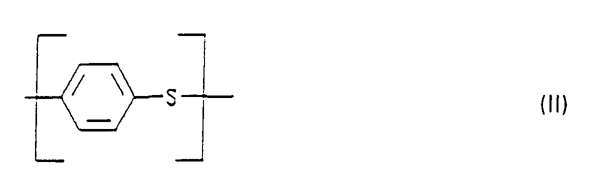 enthalten ist.

3. Filtermaterial nach Anspruch 1 oder 2, dadurch gekennzeichnet, daß das mittlere Molekulargewicht M_{w} des Polyarylenthioethers 4 000 bis 200 000 g/Mol beträgt.

4. Verfahren zur Entfernung von Stickoxiden aus Gasen und Flüssigkeiten wobei ein Filter eingesetzt wird, das ein Filtermaterial gemäß einem der Ansprüche 1 bis 3 enthält, das Gas oder die Flüssigkeit mit dem Filtermaterial in Kontakt gebracht wird und dabei die Stickoxide durch eine chemische Reaktion mit dem Filtermaterial entfernt werden.

5. Verfahren nach Anspruch 4, dadurch gekennzeichnet, daß die Entfernung der Stickoxide bei Temperaturen von minus 10 bis + 240 °C erfolgt.

6. Verfahren nach einem der Ansprüche 4 oder 5, dadurch gekennzeichnet, daß die Verweilzeit der Stickoxid-haltigen Gase im Filtermaterial 0,1 Sekunden bis 20 Minuten beträgt.

7. Verfahren nach einem der Ansprüche 4 oder 5, dadurch gekennzeichnet, daß die Verweilzeit der Stickoxid-haltigen Gase im Filtermaterial 0,5 Sekunden bis 1 Minute beträgt.

8. Verfahren nach einem der Ansprüche 4 bis 7, wobei das Filtermaterial in Form von Pulver, Fasern, Formkörpern, Folien oder Folienschnipseln eingesetzt wird.

9. Verwendung eines Filtermaterials gemäß einem der Ansprüche 1 bis 3 in Filtermasken oder Klimaanlagen, als Luft- oder Abgasfilter in Automobilen oder in der Rauchgasreinigung.

## Claims

1. A polymer-based filter material for removing oxides of nitrogen from gases and liquids by chemical reaction between the material and oxides of nitrogen, which comprises a polyarylenethioether with repeating units of the formula
-[(Ar¹)ₙ-X]ₘ-[(Ar²)ᵢ-Y]ⱼ-[(Ar³)ₖ-Z]ₗ-[(Ar⁴)ₒ-W]ₚ- (I)
in which Ar¹, Ar², Ar³, Ar⁴, W, X, Y and Z independently of one another are identical or different, the indices n, m, i, j, k, l, o and p independently of one another are zero or integers 1, 2, 3 or 4, the sum of which is at least 2, Ar¹, Ar², Ar³ and Ar⁴ are arylene systems of 6 to 18 carbon atoms and W, X, Y and Z are divalent linking groups selected from -SO₂-, -S-, -SO-, -CO-, -O-, -CO₂- or alkylene or alkylidene groups of 1 to 6 carbon atoms, and at least one of the linking groups W, X, Y or Z comprises -S-, as well as at least one oxidizing agent having an electron potential of greater than or equal to 0.96 V.

2. A filter material as claimed in claim 1, which comprises, as polyarylenethioether, polyphenylene sulfide containing repeating units of the formula

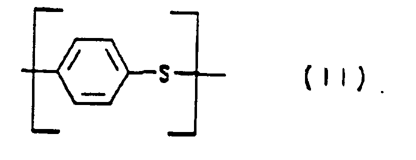

3. A filter material as claimed in claim 1 or 2, wherein the average molecular weight M_{W} of the polyarylenethioether is from 4,000 to 200,000 g/mol.

4. A method of removing oxides of nitrogen from gases and liquids, a filter being employed which contains a filter material as claimed in any one of claims 1 to 3, the gas or the liquid being brought into contact with the filter material and the oxides of nitrogen being removed in the process by a chemical reaction with the filter material.

5. The method as claimed in claim 4, wherein the removal of the oxides of nitrogen is carried out at temperatures of from minus 10 to +240°C.

6. The method as claimed in either of claims 4 or 5, wherein the residence time of the gases containing oxides of nitrogen in the filter material is from 0.1 second to 20 minutes.

7. The method as claimed in either of claims 4 or 5, wherein the residence time of the gases containing oxides of nitrogen in the filter material is from 0.5 second to 1 minute.

8. The method as claimed in any one of claims 4 to 7, the filter material being employed in the form of powder, fibers, shaped articles, films or film scraps.

9. The use of a filter material as claimed in any one of claims 1 to 3 in filter masks or air-conditioning systems, as an air or exhaust filter in automobiles or in flue gas purification.

## Revendications

1. Matériau de filtre à base de polymère en vue de l'élimination d'oxydes d'azote de gaz ou de liquides par réaction chimique entre le matériau et les oxydes d'azote, caractérisé en ce qu'il contient un thioéther de polyarylène ayant des unités récurrentes de formule
-[(Ar¹)ₙ-X]ₘ-[(Ar²)ᵢ-Y]ⱼ-[(Ar³)ₖ-Z]ₗ-[(Ar⁴)ₒ-W]ₚ- (I)
où Ar¹, Ar², Ar³, Ar⁴, W, X, Y et Z sont, indépendamment les uns des autres, identiques ou différents, les indices n, m, i, j, k, l, o et p sont, indépendamment les uns des autres, zéro ou les nombres entiers 1, 2, 3 ou 4, où leur somme est au moins de 2, où Ar¹, Ar², Ar³ et Ar⁴ sont des systèmes arylène ayant de 6 à 18 atomes de carbone et où W, X, Y, et Z représentent des groupements de liaison divalents, choisis parmi les groupements -SO₂-, -S-, -SO-, -CO-, -O-, -CO₂ ou alkylène ou alkylidène, ayant 1 à 6 atomes de carbone, et au moins un des groupements de liaison W, X, Y ou Z se compose de -S-, ainsi qu'au moins un agent d'oxydation ayant un potentiel d'électrode supérieur ou égal à 0,96 V.

2. Matériau de filtre selon la revendication 1, caractérisé en ce qu'il contient, en tant que thioéther de polyarylène, du sulfure de polyphénylène ayant des unités récurrentes de formule

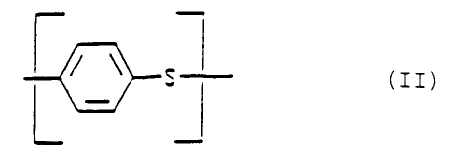

3. Matériau de filtre selon la revendication 1 ou 2, caractérisé en ce que le poids moléculaire moyen M_{W} du thioéther de polyarylène est de 4 000 à 200 000 g/mole.

4. Procédé d'élimination d'oxydes d'azote de gaz ou de liquides, caractérisé en ce que l'on utilise un filtre qui contient un matériau de filtre conformément à l'une des revendications 1 à 3, que l'on met le gaz ou le liquide en contact avec le matériau de filtre et que l'on élimine en l'occurrence les oxydes d'azote grâce à une réaction chimique avec le matériau de filtre.

5. Procédé selon la revendication 4, caractérisé en ce que l'élimination des oxydes d'azote se fait à des températures de moins 10 à + 240°C.

6. Procédé selon l'une quelconque des revendications 4 ou 5, caractérisé en ce que le temps de séjour des gaz contenant des oxydes d'azote dans le matériau de filtre est de 0,1 seconde à 20 minutes.

7. Procédé selon l'une quelconque des revendications 4 ou 5, caractérisé en ce que le temps de séjour des gaz contenant des oxydes d'azote dans le matériau de filtre est de 0,5 seconde à 1 minute.

8. Procédé selon l'une quelconque des revendications 4 à 7, où le matériau de filtre est utilisé sous la forme de poudre, de fibres, de corps de forme, de feuilles ou de fragments de feuille.

9. Utilisation d'un matériau de filtre conformément à l'une quelconque des revendications 1 à 3, dans des masques de filtre ou dans des installations de climatisation, en tant que filtre d'air ou filtre de gaz d'échappement dans des automobiles ou dans le nettoyage des gaz de fumée.
